# FASCICULE DE BREVET EUROPEEN

(11) **EP 3 956 178 B1**
(45) Date de publication et mention de la délivrance du brevet: **07.06.2023**
(21) Numéro de dépôt: 20725790.8
(22) Date de dépôt: 15.04.2020
(51) Int. Cl.: B60R 13/02

(54) **DISPOSITIF D'HABILLAGE ANTI-ROTATION POUR UN MONTANT D'UN VÉHICULE AUTOMOBILE**
ANTI-ROTATION-VERKLEIDUNG FÜR EINE SÄULE EINES KRAFTFAHRZEUGS
ANTI-ROTATION TRIM DEVICE FOR A PILLAR OF A MOTOR VEHICLE

(30) Priorité: 16.04.2019 FR 1904032
(43) Date de publication de la demande: 23.02.2022
(73) Titulaire: PSA Automobiles SA, 78300 Poissy (FR)
(72) Inventeur: RIVIERRE, Laurent, 75015 PARIS (FR); VILLA, Laurent, 91460 MARCOUSSIS (FR)
(86) Numéro de dépôt international: PCT/FR2020/000120
(87) Numéro de publication internationale: WO 2020/212657

(56) Documents cités:
- EP-A2- 1 997 692
- DE-A1- 4 327 717
- DE-A1- 10 114 310
- DE-C2- 10 114 310

## Description

### Domaine technique de l'invention

La présente invention revendique la priorité de la demande française 1904032 déposée le 16 Avril 2019.

L'invention concerne les dispositifs d'habillage qui sont destinés à masquer des pièces métalliques définissant des doublures de montants de véhicules automobiles.

### Etat de la technique

Certains véhicules automobiles comprennent une structure délimitant un habitacle et comportant des montants (ou pieds) sur des côtés latéraux opposés.

Comme le sait l'homme de l'art, ces montants comprennent généralement sur leur face interne (orientée vers l'habitacle) une pièce métallique définissant une doublure et masquée, côté habitacle, par un dispositif d'habillage, parfois appelé garniture.

Par exemple, le document DE10114310 divulgue un dispositif d'habillage d'une pièce métallique définissant une doublure de montant de véhicule. Certains de ces dispositifs d'habillage, qui équipent généralement des montants milieux (ou centraux), comprennent une pièce supérieure et une pièce inférieure comportant respectivement des parties inférieure et supérieure qui se recouvrent. La partie inférieure de la pièce supérieure est définie dans un décrochement et comprend deux premiers trous destinés à son couplage à la doublure (généralement par vissage), deux deuxièmes trous espacés suivant la direction longitudinale du véhicule et un troisième trou intercalé entre ces deuxièmes trous. La partie supérieure de la pièce inférieure comprend deux éléments de couplage destinés à traverser respectivement les deuxièmes trous pour coupler la partie supérieure à la partie inférieure avec un jeu suivant la direction verticale du véhicule, et un pion de centrage intercalé entre ces éléments de couplage et destiné à traverser le troisième trou.

Ce pion de centrage est destiné à permettre un positionnement suivant la direction verticale de la partie supérieure de la pièce inférieure par rapport à la partie inférieure de la pièce supérieure. Cependant, ce pion de centrage étant défini dans une position sensiblement centrale, lorsque la pièce supérieure est solidarisée fixement à la doublure en étant légèrement de travers, il peut apparaître un jeu irrégulier allant en s'évasant entre le bord du décrochement définissant la partie inférieure de la pièce supérieure et le bord d'extrémité de la partie supérieure de la pièce inférieure. Ce jeu irrégulier, parfois appelé « queue de billard », nuit à l'impression de qualité du véhicule, et donc peut nécessiter des reprises onéreuses et chronophages en fin de chaîne de montage (lorsqu'il a été détecté sur cette dernière) ou dans un service après-vente (lorsqu'il a été détecté par le propriétaire du véhicule).

L'invention a donc notamment pour but d'améliorer la situation.

### Présentation de l'invention

Elle propose notamment à cet effet un dispositif d'habillage, destiné à équiper une pièce métallique définissant une doublure d'un montant d'un véhicule automobile, et comprenant :
- une pièce supérieure comportant une partie inférieure définie dans un décrochement et munie de deux premiers trous destinés à son couplage à la pièce métallique et deux deuxièmes trous espacés suivant une direction longitudinale du véhicule, et
- une pièce inférieure comportant une partie supérieure munie de deux éléments de couplage destinés à traverser respectivement les deuxièmes trous pour coupler la partie supérieure à la partie inférieure avec un jeu suivant une direction verticale du véhicule.

Ce dispositif d'habillage se caractérise par le fait :
- que la partie inférieure de sa pièce supérieure comprend deux troisièmes trous espacés suivant la direction longitudinale, et
- que la partie supérieure de sa pièce inférieure comprend deux pions de positionnement destinés à traverser respectivement ces troisièmes trous et ayant des actions anti-rotation selon des sens opposés pour empêcher une désorientation de la partie supérieure par rapport à la partie inférieure.

Ainsi, le bord d'extrémité de la partie supérieure de la pièce inférieure est contraint de rester sensiblement parallèle au bord d'extrémité du décrochement, ce qui permet d'éviter d'avoir à effectuer une reprise.

Le dispositif d'habillage selon l'invention peut comporter d'autres caractéristiques qui peuvent être prises séparément ou en combinaison, et notamment :
- les troisièmes trous peuvent être définis dans deux premiers bords latéraux opposés de la partie inférieure de la pièce supérieure et destinés à masquer une partie de bords latéraux de la pièce métallique. Dans ce cas, les pions de positionnement peuvent être définis dans deux seconds bords latéraux opposés de la partie supérieure de la pièce inférieure et destinés à masquer ces premiers bords latéraux ;
- chaque pion de positionnement peut comprendre une paroi propre à s'appuyer contre un bord inférieur ou supérieur participant à la délimitation d'un troisième trou correspondant ;
- les éléments de couplage peuvent être adaptés au clippage dans les deuxièmes trous ;
- les premiers trous peuvent être oblongs, et dans ce cas l'un au moins d'entre eux a une grande longueur suivant la direction longitudinale du véhicule ;
- la partie inférieure de la pièce supérieure peut comprendre un quatrième trou intercalé entre ses deuxièmes trous. Dans ce cas, la partie supérieure de la pièce inférieure peut comprendre un pion de centrage intercalé entre ses éléments de couplage et destiné à traverser le quatrième trou.

L'invention propose également un véhicule automobile comprenant une structure délimitant un habitacle et comportant au moins deux montants opposés et auxquels sont respectivement solidarisées fixement des pièces métalliques définissant des doublures, et au moins deux dispositifs d'habillage du type de celui présenté ci-avant et solidarisés respectivement aux pièces métalliques.

Par exemple, chaque montant peut être situé dans une partie centrale d'un côté latéral de l'habitacle.

### Brève description des figures

D'autres caractéristiques et avantages de l'invention apparaîtront à l'examen de la description détaillée ci-après, et des dessins annexés, sur lesquels :
[Fig. 1] illustre schématiquement, dans une vue en perspective, un exemple de montant central (ou milieu) équipé d'une partie d'une pièce métallique de doublure elle-même équipée d'une partie d'un dispositif d'habillage selon l'invention,
[Fig. 2] illustre schématiquement, dans une vue en perspective, un exemple de réalisation d'une partie inférieure d'une pièce supérieure d'un dispositif d'habillage selon l'invention,
[Fig. 3] illustre schématiquement, dans une vue en perspective, un exemple de réalisation d'une partie supérieure d'une pièce inférieure d'un dispositif d'habillage selon l'invention, destinée à être couplée à la partie inférieure de la pièce supérieure de la figure 2,
[Fig. 4] illustre schématiquement, dans une vue en perspective, le couplage entre la partie supérieure de la pièce inférieure de la figure 3 et la partie inférieure de la pièce supérieure de la figure 2, et
[Fig. 5] illustre schématiquement, dans une vue en perspective, une partie du couplage suivant la direction verticale entre la partie supérieure de la pièce inférieure de la figure 3 et la partie inférieure de la pièce supérieure de la figure 2.

### Description détaillée de l'invention

L'invention a notamment pour but de proposer un dispositif d'habillage 1 anti-rotation et destiné à équiper une pièce métallique 2 définissant une doublure d'un montant 3 d'un véhicule automobile.

Dans ce qui suit, on considère, à titre d'exemple non limitatif, que le véhicule automobile est une berline. Mais l'invention n'est pas limitée à ce type de véhicule automobile. En effet, elle concerne tout véhicule automobile comprenant une structure délimitant un habitacle et comportant aux moins deux montants (ou pieds). Ainsi, l'invention concerne aussi les véhicules monospaces, les véhicules métis (ou « crossover »), les véhicules de loisir bicorps (ou SUV (« Sport Utility Véhiculé »)) et les véhicules utilitaires, par exemple.

Par ailleurs, on considère dans ce qui suit, à titre d'exemple non limitatif, que les montants 3 sont situés respectivement dans des parties centrales des deux côtés latéraux de l'habitacle. Mais il pourrait aussi s'agir de montants avant (situés respectivement dans des parties avant des deux côtés latéraux de l'habitacle) ou de montants arrière (situés respectivement dans des parties arrière des deux côtés latéraux de l'habitacle).

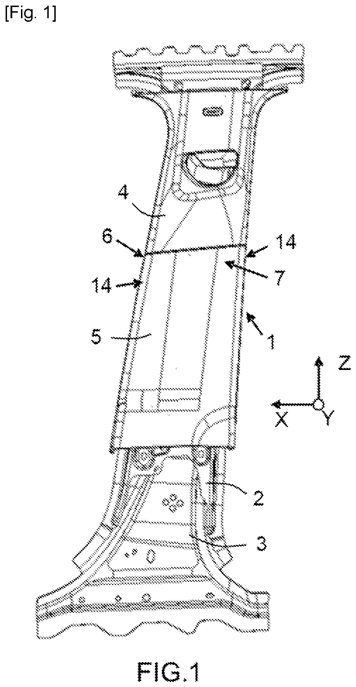

Sur les figures 1 à 5 la direction X est une direction dite longitudinale du véhicule, laquelle est parallèle aux côtés latéraux de ce dernier, la direction Y est une direction dite transversale du véhicule, laquelle est perpendiculaire à la direction X, et la direction Z est une direction dite verticale du véhicule, laquelle est perpendiculaire aux directions longitudinale X et transversale Y.

On a schématiquement représenté sur la figure 1 un exemple de montant central (ou milieu) 3 comprenant une face interne (orientée vers l'intérieur de l'habitacle) à laquelle est solidarisée fixement (par exemple par soudage) une pièce métallique 2 définissant une doublure et comprenant une face interne à laquelle est solidarisé un dispositif d'habillage 1 selon l'invention.

Comme illustré, un dispositif d'habillage 1, selon l'invention, comprend au moins une pièce supérieure 4 et une pièce inférieure 5 comportant respectivement des parties inférieure 6 et supérieure 7 qui se recouvrent après couplage.

La pièce supérieure 4 peut, par exemple, être réalisée en matière plastique (éventuellement avec un revêtement additionnel, comme par exemple un tissu ou du cuir). La pièce inférieure 5 peut, par exemple, être réalisée en matière plastique (éventuellement avec un revêtement additionnel, comme par exemple un tissu ou du cuir).

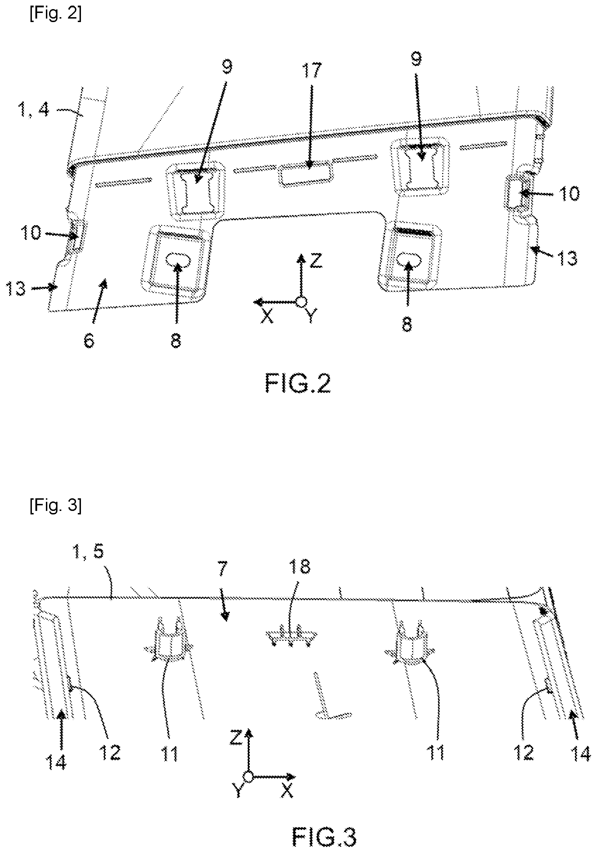

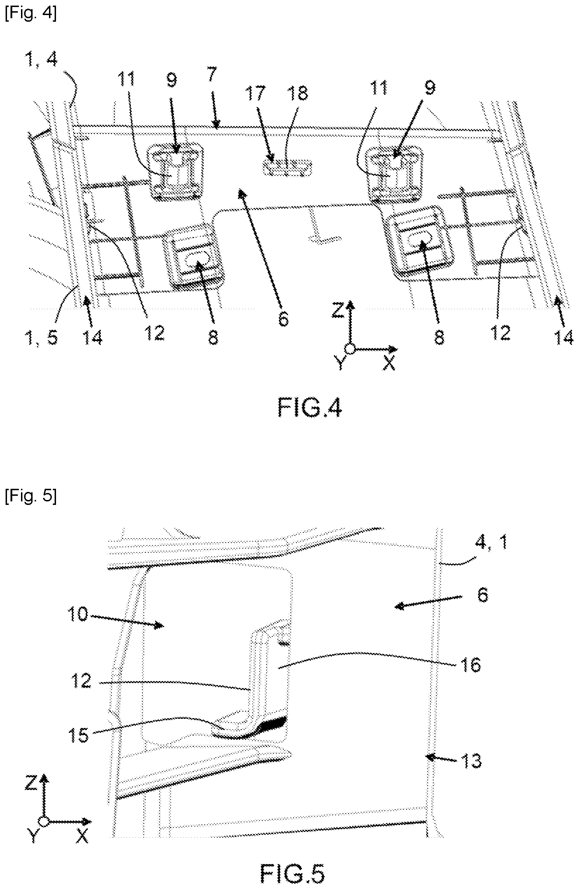

Comme illustré sur les figures 2 et 4, la partie inférieure 6 de la pièce supérieure 4 est définie dans un décrochement et comprend au moins deux premiers trous 8, deux deuxièmes trous 9 et deux troisièmes trous 10.

Les deux premiers trous 8 sont destinés au couplage de la partie inférieure 6 à la pièce métallique (ou doublure) 2. Par exemple, ce couplage se fait au moyen de deux vis dont les extrémités filetées sont vissées dans des filetages internes correspondants que comprend la pièce métallique (ou doublure) 2.

Comme illustré sur les figures 2 et 4, les deux deuxièmes trous 9 sont espacés suivant la direction longitudinale X du véhicule.

Comme illustré sur les figures 2 et 4, les deux troisièmes trous 10 sont espacés suivant la direction longitudinale X.

Comme illustré sur les figures 3 et 4, la partie supérieure 7 de la pièce inférieure 5 comprend au moins deux éléments de couplage 11 et deux pions de positionnement 12 sur une face externe orientée vers la pièce métallique (ou doublure) 2.

Comme illustré sur la figure 4, les deux éléments de couplage 11 sont destinés à traverser respectivement les deuxièmes trous 9 pour coupler la partie supérieure 7 de la pièce inférieure 5 à la partie inférieure 6 de la pièce supérieure 4, avec un jeu suivant la direction verticale Z du véhicule.

Egalement comme illustré sur la figure 4, les deux pions de positionnement 12 sont destinés à traverser respectivement les troisièmes trous 10. De plus, ces pions de positionnement 12 ont des actions anti-rotation selon des sens opposés pour empêcher une désorientation de la partie supérieure 7 de la pièce inférieure 5 par rapport à la partie inférieure 6 de la pièce supérieure 4.

On comprendra en effet que le pion de positionnement 12 de gauche (et donc à droite sur les figures 3 et 4) empêche la rotation dans le sens inverse des aiguilles d'une montre de la partie supérieure 7 par rapport à la partie inférieure 6 et donc un écartement de l'extrémité gauche du bord d'extrémité de la partie supérieure 7 de la pièce inférieure 5 de l'extrémité gauche du bord d'extrémité du décrochement définissant la partie inférieure 6 de la pièce supérieure 4. Inversement, le pion de positionnement 12 de droite (et donc à gauche sur les figures 3 et 4) empêche la rotation dans le sens des aiguilles d'une montre de la partie supérieure 7 par rapport à la partie inférieure 6 et donc un écartement de l'extrémité droite du bord d'extrémité de la partie supérieure 7 de la pièce inférieure 5 de l'extrémité droite du bord d'extrémité du décrochement définissant la partie inférieure 6 de la pièce supérieure 4. Par conséquent, le bord d'extrémité de la partie supérieure 7 de la pièce inférieure 5 est contraint de rester sensiblement parallèle au bord d'extrémité du décrochement, ce qui permet d'éviter d'avoir à effectuer une reprise.

Par exemple, et comme illustré non limitativement sur les figures 2 et 4, les troisièmes trous 10 peuvent être définis dans deux premiers bords latéraux 13 opposés de la partie inférieure 6 de la pièce supérieure 4 et destinés à masquer une partie de bords latéraux correspondants de la pièce métallique (ou doublure) 2. Dans ce cas, comme illustré non limitativement sur les figures 3 et 4, les pions de positionnement 12 sont définis dans deux seconds bords latéraux 14 opposés de la partie supérieure 7 de la pièce inférieure 5. Ces seconds bords latéraux 14 sont destinés à masquer les premiers bords latéraux 13 de la partie inférieure 6 et donc rendent invisibles les troisièmes trous 10 et les pions de positionnement 12.

Cette option permet d'optimiser les actions anti-rotation des pions de positionnement 12 par une minimisation des moments des forces, et donc aussi l'empêchement de la désorientation de la partie supérieure 7 de la pièce inférieure 5 par rapport à la partie inférieure 6 de la pièce supérieure 4.

Afin de faciliter l'entrée des pions de positionnement 12 dans les troisièmes trous 10 lors du couplage des parties supérieure 7 et inférieure 6, la partie supérieure 7 de la pièce inférieure 5 est légèrement souple.

Egalement par exemple, et comme illustré non limitativement sur les figures 3 à 5, chaque pion de positionnement 12 peut comprendre une paroi 15 propre à s'appuyer contre un bord inférieur ou supérieur qui participe à la délimitation d'un troisième trou 10 correspondant. Cette paroi 15 est définie sur la face externe de la partie supérieure 7 (orientée vers la partie métallique 2) de manière à se retrouver placée sensiblement parallèlement au bord inférieur ou supérieur précité. Dans l'exemple illustré non limitativement sur la figure 5, chaque paroi 15 est placée sensiblement parallèlement au bord inférieur délimitant en partie le troisième trou 10 correspondant.

Chaque paroi 15 est de préférence prolongée à environ 90° par une autre paroi 16 de son pion de positionnement 12, afin de renforcer sa tenue en présence d'une contrainte liée au positionnement de la partie supérieure 7 de la pièce inférieure 5 par rapport à la partie inférieure 6 de la pièce supérieure 4.

On notera, comme illustré non limitativement sur les figures 3 et 4, que les éléments de couplage 11 peuvent être adaptés au clippage dans les deuxièmes trous 9. Dans l'exemple illustré, chaque élément de couplage 11 comprend une tête ayant une partie avant arrondie et déformable qui permet son passage au travers du deuxième trou 9, puis qui reprend sa forme une fois passée placée derrière ce deuxième trou 9 afin d'empêcher son retrait.

On notera également, comme illustré non limitativement sur la figure 2, que les premiers trous 8 sont préférentiellement oblongs. Dans ce cas, l'un au moins de ces premiers trous 8 (et de préférence les deux) a une grande longueur suivant la direction longitudinale X, afin de permettre un positionnement précis en X de la partie inférieure 6 de la pièce supérieure 4.

On notera également, comme illustré non limitativement sur la figure 2, que la partie inférieure 6 de la pièce supérieure 4 peut éventuellement comprendre un quatrième trou 17 intercalé entre ses deuxièmes trous 9. Dans ce cas, comme illustré non limitativement sur les figures 3 et 4, la partie supérieure 7 de la pièce inférieure 5 comprend sur sa face externe un pion de centrage 18 intercalé entre les éléments de couplage 11 et destiné à traverser le quatrième trou 17. Cela permet d'améliorer la précision du positionnement suivant la direction verticale Z de la partie supérieure 7 de la pièce inférieure 5 par rapport à la partie inférieure 6 de la pièce supérieure 4.

## Revendications

1. Dispositif d'habillage (1) pour une pièce métallique (2) définissant une doublure d'un montant (3) d'un véhicule automobile, ledit dispositif (1) comprenant i) une pièce supérieure (4) comportant une partie inférieure (6) définie dans un décrochement et munie de deux premiers trous (8) destinés à son couplage à ladite pièce métallique (2) et deux deuxièmes trous (9) espacés suivant une direction longitudinale dudit véhicule, et ii) une pièce inférieure (5) comportant une partie supérieure (7) munie de deux éléments de couplage (11) destinés à traverser respectivement lesdits deuxièmes trous (9) pour coupler ladite partie supérieure (7) à ladite partie inférieure (6) avec un jeu suivant une direction verticale dudit véhicule, **caractérisé en ce que** ladite partie inférieure (6) comprend deux troisièmes trous (10) espacés suivant ladite direction longitudinale, et **en ce que** ladite partie supérieure (7) comprend deux pions de positionnement (12) destinés à traverser respectivement lesdits troisièmes trous (10) et ayant des actions anti-rotation selon des sens opposés pour empêcher une désorientation de ladite partie supérieure (7) par rapport à ladite partie inférieure (6).

2. Dispositif selon la revendication 1, **caractérisé en ce que** lesdits troisièmes trous (10) sont définis dans deux premiers bords latéraux (13) opposés de ladite partie inférieure (6) de la pièce supérieure (4) et destinés à masquer une partie de bords latéraux de ladite pièce métallique (2), et **en ce que** lesdits pions de positionnement (12) sont définis dans deux seconds bords latéraux (14) opposés de ladite partie supérieure (7) de la pièce inférieure (5) et destinés à masquer lesdits premiers bords latéraux (13).

3. Dispositif selon la revendication 1 ou 2, **caractérisé en ce que** chaque pion de positionnement (12) comprend une paroi (15) propre à s'appuyer contre un bord inférieur ou supérieur participant à la délimitation d'un troisième trou (10) correspondant.

4. Dispositif selon l'une des revendications 1 à 3, **caractérisé en ce que** lesdits éléments de couplage (11) sont adaptés au clippage dans lesdits deuxièmes trous (9).

5. Dispositif selon l'une des revendications 1 à 4, **caractérisé en ce que** lesdits premiers trous (8) sont oblongs, et l'un au moins d'entre eux a une grande longueur suivant ladite direction longitudinale.

6. Dispositif selon l'une des revendications 1 à 5, **caractérisé en ce que** ladite partie inférieure (6) de la pièce supérieure (4) comprend un quatrième trou (17) intercalé entre lesdits deuxièmes trous (9), et ladite partie supérieure (7) de la pièce inférieure (5) comprend un pion de centrage (18) intercalé entre lesdits éléments de couplage (11) et destiné à traverser ledit quatrième trou (17).

7. Véhicule automobile comprenant une structure délimitant un habitacle et comportant au moins deux montants (3) opposés et auxquels sont respectivement solidarisées fixement des pièces métalliques (2) définissant des doublures, **caractérisé en ce qu'**il comprend en outre au moins deux dispositifs d'habillage (1) selon l'une des revendications précédentes, solidarisés respectivement auxdites pièces métalliques (2).

8. Véhicule selon la revendication 7, **caractérisé en ce que** chaque montant (3) est situé dans une partie centrale d'un côté latéral dudit habitacle.

## Patentansprüche

1. Verkleidungsvorrichtung (1) für ein Metallteil (2), das eine Auskleidung eines Pfostens (3) eines Kraftfahrzeugs definiert, wobei die Vorrichtung (1) umfasst: i) ein Oberteil (4) mit einem unteren Teil (6), der in einem Absatz definiert ist und mit zwei ersten Löchern (8) zum Koppeln mit dem Metallteil (2) und zwei zweiten Löchern (9), die in Längsrichtung des Fahrzeugs beabstandet sind, versehen ist, und ii) ein Unterteil (5) mit einem oberen Teil (7), der mit zwei Koppelelementen (11) versehen ist, die jeweils durch die zweiten Löcher (9) zum Koppeln des oberen Teils (7) vorgesehen sind (6) an dem unteren Abschnitt (6) mit einem Spiel in einer vertikalen Richtung des Fahrzeugs, **dadurch gekennzeichnet, dass** der untere Abschnitt (6) zwei dritte Löcher (10) aufweist, die in der Längsrichtung beabstandet sind, und dass der obere Abschnitt (7) zwei Positionierstifte (12) aufweist, die jeweils durch die dritten Löcher (10) hindurchgehen und Drehungsverhinderungsaktionen in entgegengesetzten Richtungen aufweisen, um eine Desorientierung des oberen Abschnitts (7) in Bezug auf den unteren Abschnitt (6) zu verhindern.

2. Vorrichtung nach Anspruch 1, **dadurch gekennzeichnet, dass** die dritten Löcher (10) in zwei einander gegenüberliegenden ersten Seitenrändern (13) des unteren Teils (6) des oberen Teils (4) definiert sind, die dazu bestimmt sind, einen Teil der Seitenränder des metallischen Teils (2) zu verdecken, und dass die Positionierstifte (12) in zwei einander gegenüberliegenden zweiten Seitenrändern (14) des oberen Teils (7) des unteren Teils (5) definiert sind, die dazu bestimmt sind, die ersten Seitenränder (13) zu verdecken.

3. Vorrichtung nach Anspruch 1 oder 2, **dadurch gekennzeichnet, dass** jeder Positionierstift (12) eine Wand (15) aufweist, die geeignet ist, sich gegen einen unteren oder oberen Rand zu stützen, der an der Begrenzung eines entsprechenden dritten Lochs (10) beteiligt ist.

4. Vorrichtung nach einem der Ansprüche 1 bis 3, **dadurch gekennzeichnet, dass** die Kopplungselemente (11) zum Einklemmen in die zweiten Löcher (9) angepasst sind.

5. Vorrichtung nach einem der Ansprüche 1 bis 4, **dadurch gekennzeichnet, dass** die ersten Löcher (8) länglich sind und mindestens eines von ihnen eine große Länge in der Längsrichtung aufweist.

6. Vorrichtung nach einem der Ansprüche 1 bis 5, **dadurch gekennzeichnet, dass** der untere Teil (6) des oberen Teils (4) ein viertes Loch (17) aufweist, das zwischen den zweiten Löchern (9) angeordnet ist, und dass der obere Teil (7) des unteren Teils (5) einen Zentrierstift (18) aufweist, der zwischen den Kupplungselementen (11) angeordnet ist und dazu bestimmt ist, das vierte Loch (17) zu durchqueren.

7. Kraftfahrzeug mit einer Struktur, die einen Fahrgastraum begrenzt und mindestens zwei gegenüberliegende Pfosten (3) aufweist, an denen jeweils Metallteile (2) fest befestigt sind, die Auskleidungen definieren, **dadurch gekennzeichnet, dass** es außerdem mindestens zwei Verkleidungsvorrichtungen (1) nach einem der vorhergehenden Ansprüche aufweist, die jeweils mit den Metallteilen (2) fest verbunden sind.

8. Fahrzeug nach Anspruch 7, **dadurch gekennzeichnet, dass** jeder Pfosten (3) in einem mittleren Teil einer Seitenseite des Fahrgastraums angeordnet ist.

## Claims

1. A cladding device (1) for a metal part (2) defining a lining of an upright (3) of a motor vehicle, said device (1) comprising i) an upper part (4) comprising a lower part (6) defined in a recess and provided with two first holes (8) intended for its coupling to said metal part (2) and two second holes (9) spaced in a longitudinal direction of said vehicle, and ii) a lower part (5) comprising an upper part (7) provided with two coupling elements (11) intended to pass respectively through said second holes (9) in order to couple said upper part (7) to said lower part (6) with clearance in a vertical direction of said vehicle, **characterized in that** said lower part (6) comprises two third holes (10) spaced in said longitudinal direction, and **in that** said upper part (7) comprises two positioning pins (12) intended to pass respectively through said third holes (10) and having anti-rotation actions in opposite directions to prevent disorientation of said upper part (7) with respect to said lower part (6).

2. Device according to claim 1, **characterized in that** the said third holes (10) are defined in two first opposite lateral edges (13) of the said lower part (6) of the upper part (4) and intended to mask a part of lateral edges of the said metal part (2), and **in that** the said positioning pins (12) are defined in two second opposite lateral edges (14) of the said upper part (7) of the lower part (5) and intended to mask the said first lateral edges (13).

3. Device according to claim 1 or 2, **characterized in that** each positioning peg (12) comprises a wall (15) able to bear against a lower or upper edge participating in the delimitation of a corresponding third hole (10).

4. Device according to one of claims 1 to 3, **characterized in that** the said coupling elements (11) are suitable for clipping into the said second holes (9).

5. Device according to one of claims 1 to 4, **characterized in that** the said first holes (8) are oblong, and at least one of them has a great length in the said longitudinal direction.

6. Device according to one of claims 1 to 5, **characterized in that** the said lower part (6) of the upper part (4) comprises a fourth hole (17) inserted between the said second holes (9), and the said upper part (7) of the lower part (5) comprises a centering pin (18) inserted between the said coupling elements (11) and intended to pass through the said fourth hole (17).

7. Motor vehicle comprising a structure delimiting a passenger compartment and comprising at least two opposite uprights (3) to which are respectively fixedly secured metal parts (2) defining linings, **characterized in that** it further comprises at least two trim devices (1) according to one of the preceding claims, respectively secured to said metal parts (2).

8. Vehicle according to claim 7, **characterized in that** each upright (3) is situated in a central part of a lateral side of the said passenger compartment.
